# EUROPEAN PATENT APPLICATION

(11) **EP 4 760 265 A1**
(43) Date of publication of application: **17.06.2026**
(21) Application number: 24219546.9
(22) Date of filing: 12.12.2024
(51) Int. Cl.: G01N 35/10, G01N 35/00

(54) **AUTOMATIC LABORATORY INSTRUMENT**

(71) Applicant: Roche Diagnostics International AG, 6343 Rotkreuz (CH)
(72) Inventor: Meier, Alexander Heinz, 6343 Rotkreuz (CH)
(74) Representative: Mewburn Ellis LLP

(57) **Abstract**

An automated laboratory instrument (100) for analysing biological samples and method detection method (1000, 2000), the automatic laboratory instrument (100) comprising: a pipette head (110) having a channel (114), the channel (114) being connectable to a pipette tip (120) through which fluid is aspirated and dispensed; a flow controller (130), configured to control the flow of fluid through the channel (114) of the pipette head (110); a pressure sensor (140) configured to detect a pressure within the channel (114) of the pipette head (110) so as to collect pressure data for the channel (114); and a controller (150) connected to the pressure sensor (140), wherein the controller (150) is configured to: receive the pressure data from the pressure sensor (140), extract a value for each of two or more properties of the received pressure data, compare the extracted values of the two or more properties to respective property thresholds, and record a leakage event when each of the extracted values exceeds its respective property threshold.

## Description

### Field of the Invention

The present disclosure relates to automatic laboratory instruments and particularly, although not exclusively, to automatic laboratory instruments for analysing biological samples and detecting leakage events in pipette heads.

### Background

Large scale biological sample analysis instruments are highly important in laboratory environments today, both to increase and ensure efficiency. Such instruments typically use one or more multi-channel pipette heads to perform tests on multiple samples simultaneously, thereby increasing laboratory throughput and reducing test result waiting times. These instruments are also typically automated so that the biological sample analysis can be performed with minimum oversight, freeing up additional time for the laboratory staff.

However, the inventors have observed considerable leaking in the multi-channel pipette heads used in such instruments, caused, for example, by a degradation in the connection between a channel of the multi-channel pipette head and a disposable pipette tip connected thereto. Such leaking leads to soiled workstations (e.g., from fluid droplets falling on to portions of the workstation whilst the multi-channel pipette head is in transit), as well as a degradation in testing performance and accuracy due to the unaccounted loss of fluid from the multi-channel pipette head.

The inventors have also observed that existing leakage detection processes have proven insufficient to overcome these leakage problems. More specifically, existing leakage detection processes often return inaccurate results. For example, a multi-channel pipette head reported to be leakage free is often subsequently found to be leaking considerably. Or alternatively, the leakage detection processes may return a false positive result, leading to the multi-channel pipette head being replaced unnecessarily. Moreover, some existing leakage detection processes require the instrument to cease performing biological sample analysis for the duration of the test. This decreases the efficiency of the device in general, and also means that leakages can go undetected for extended periods of time between scheduled leakage testing periods.

As such, the inventors have recognised a need to provide more accurate leakage detection means that can be performed in-situ with biological sample analysis.

The present disclosure has been devised in light of the above considerations.

### Summary of the Invention

According to one aspect of the present disclosure, there is provided an automatic laboratory instrument for analysing biological samples, the automatic laboratory instrument comprising: a pipette head having a channel, the channel being connectable to a respective pipette tip, through which fluid is aspirated and dispensed; a flow controller, configured to control the flow of fluid the channel of the pipette head; a pressure sensor configured to detect a pressure within the channel of the pipette head so as to collect pressure data for the channel; and a controller connected to the pressure sensor, wherein the controller is configured to: receive the pressure data from the pressure sensor, extract a value for each of two or more properties of the received pressure data, compare the extracted values of the two or more properties to respective property thresholds, and record a leakage event when each of the extracted values is greater than its respective property threshold.

The use of at least two properties of the pressure data to determine leakage events can increase the accuracy of the leakage detection. For example, false positive leakage events (e.g., events which may otherwise cause a leakage event to be recorded despite there being no leakage, such as an air bubble bursting in the pipette tip) are less likely to trigger multiple thresholds tailored to the detectable pressure characteristics of an actual leakage event. In this way, false positive leakage events can be filtered out, and the overall accuracy of the leakage detection may be increased.

In a further aspect, there is provided an automatic laboratory instrument as set out in the first aspect, where a value for at least one (or only one) property is extracted instead of two or more, and so a leakage event recorded when the value of the extracted valued is greater than a respective property threshold. In all other respects, the automatic laboratory instrument of the further aspect is the same as the automatic laboratory instrument of the first aspect.

The pipette head may have more than one channel. The pipette head may be a multi-channel pipette head having more than one channel. The multi-channel pipette head may be connectable to a plurality of pipette tips. Each respective channel of the one or more channels may be connectable to a respective pipette tip of the plurality of pipette tips. The pressure sensor may be configured to detect a pressure within each channel of the one or more channels of the pipette head so as to collect pressure data for each channel of the one or more channels. The controller may be configured, for each channel of the one or more channels, to: receive pressure data from the pressure sensor, extract a value for each of two or more properties of the received pressure data, compare the extracted values of the two or more properties to respective property thresholds, and record a leakage event associated with the respective channel to which the pressure data relates when each of the extracted values exceeds its respective property threshold.

The channel of the pipette head, and/or pipette tip connected the channel of the pipette head, may extend along a longitudinal axis.

The pipette head may be movable along the longitudinal axis. The pipette head may be movable along the longitudinal axis into a container. The container may contain a fluid (e.g. liquid) to be aspirated, or may be intended for dispensing fluid (e.g., liquid or gas) into. The pipette head may be moveable in a first direction along the longitudinal axis until the pipette tip connected to the channel of the pipette head contacts a fluid in the container to be aspirated. Once fluid is aspirated, the pipette head may be moved in a second direction along the longitudinal axis opposite the first direction until the pipette tip is longitudinally clear of the container sides.

The pipette head may also be movable in a lateral plane perpendicular or substantially perpendicular to the longitudinal axis. For example, the pipette head may move in the lateral plane between a first container and a second container. In other words, the pipette head may move in the lateral plane from a first position in which the pipette head is longitudinally adjacent to a first container, to a second position in which the pipette head is longitudinally adjacent a second container. The first container may hold a fluid to be aspirated by the pipette head, and the second container may be intended to hold a fluid dispensed from the pipette head, or vice versa.

Where there is a plurality of channels (the pipette head is a multi-channel pipette head) each pipette tip of the plurality of pipette tips may be connected to a respective channel of the multi-channel pipette head.

The pipette tip may include a first end and a second end opposite the first end. The first end and second end of the pipette tip may be at opposite longitudinal ends of said pipette tip. The first end may be attachable to the channel of the pipette head, and the second end may include an opening through which fluid is aspirated and dispensed. Aspirated fluid may be held in the pipette tip between the first end and the second end. Advantageously, this means that fluid aspirated and dispensed through the pipette tip does not enter the pipette head (and more specifically the channel of the pipette head), thereby avoiding contamination of the pipette head.

The pipette tip may be detachable from the pipette head.

The pipette tip may be a disposable pipette tip. A disposable pipette tip may be defined as a pipette tip intended to be used only once (i.e., for one analysis) within the automatic laboratory instrument. For example, the disposable pipette tip may include a coupling portion for connection to the pipette head. The disposable tip may be connected to the channel of the pipette head, used to aspirate a fluid and then dispense said fluid at a later time, and then detached from the channel of the pipette head and discarded.

Alternatively, the pipette tip may be a reusable pipette tip. A reusable pipette tip may be defined as a pipette tip intended to be used to analyse more than one biological sample (e.g., to aspirate and dispense fluids in sequence multiple times).

Fluid that is aspirated/dispensed through the pipette tip may include a liquid. The liquid component may be a lysis buffer, or other liquid solution.

Fluid that is aspirated/dispensed through the pipette tip may include a gas. The gas may be air. The gas may be aspirated following the aspiration of a liquid. The gas may provide a buffer between an end of the pipette tip (e.g., through which the fluid is aspirated/dispensed) and the previously aspirated liquid. In this way, leakage may be advantageously reduced. The buffer may be referred to as a Trailing Air Gap (TAG).

Where there is a plurality of channels (the pipette head is a multi-channel pipette head), the flow controller may be connected to all of the channels of the multi-channel pipette head.

The control of the flow of fluid through the channel of the pipette head may refer to the control of gas (e.g., air) through the pipette head. This controlled gas may be different to the fluid being aspirated and dispensed through the pipette tip.

The flow controller may control the flow of fluid in the pipette tip via the pipette head.

The control of the flow of fluid through the channel of the pipette head causes changes in pressure in the pipette tip, and allows fluid to be aspirated into or dispensed from the pipette tip. More specifically, the control of the flow of fluid through the channel of the pipette head may allow fluid to be drawn out of the pipette tip or pushed into the pipettes tip via the connections between first end of the pipette tip and the channel of the pipette head. In this way, the pressure within the pipette tip may be decreased/increased, thereby causing fluid to be aspirated into or dispensed out of the pipette tip at second ends of the pipette tip opposite the first end of the pipette tip connected to the channel of the pipette head.

The flow controller may be a fluid pump, usable to blow or extract fluid (e.g., air) into or out of the channel of the pipette head. The flow controller may be a piston that increases/decreases the volume in the channel of the pipette head usable to blow or extract fluid (e.g., air) into or out of the channel of the pipette head. The piston may be in a cylinder. The piston may be usable to increase/decrease the pressure in the channel of the pipette head.

In some examples, the controller may extract two or more values for each of one or more of the two or more properties of the received pressure data. The two or more values extracted for each of the one or more respective properties may include a maximum value of said respective property, and a minimum value of said respective property. The minimum value of the property may be a negative number.

There may be more than one threshold for each property, for example, there may be a maximum threshold and a minimum threshold for one or more of the properties of the two or more properties. A maximum property threshold for a respective property may be compared to a maximum value extracted for said respective property. A minimum property threshold for a respective property may be compared to a minimum value extracted for said respective property

Leakage events may correspond to droplets (e.g., formed of aspirated fluid) falling from the pipette tip and/or a stream of liquid flowing out of the pipette tip.

A single leakage event may be detectable/recorded per biological sample process run. Alternatively, multiple leakage events may be detectable/recordable per biological sample process run.

In some examples, the two or more properties include one or more of a magnitude of the pressure, a relative pressure, a rate of change (slope) of the pressure, and a standard deviation of the rate of change of the pressure.

The magnitude of the pressure refers to the numerical value of pressure measured by the pressure sensor (or an average numerical value of pressure taken across multiple pressure sensor measurements). The numerical value may be negative. Where the pressure sensor performs multiple measurements, the magnitude of the pressure used may be the most extreme magnitude value(s) of pressure measured across the multiple measurements, or across a subset of the multiple measurements obtained in a region of interest. The region of interest may be determined by the controller. The most extreme magnitude value(s) of pressure may be the biggest pressure value measured, and/or the smallest pressure value measured.

The magnitude pressure value may alternatively refer to a difference between the most extreme magnitude pressure value(s) measured (e.g., in the region of interest) and an initial pressure measured (e.g., in the region of interest). In this way, the magnitude pressure measurements may be calibrated against an initial pressure condition.

The magnitude pressure measurement(s) may be compared to a maximum pressure threshold, and/or a minimum pressure threshold. Where the magnitude pressure value is a difference between an initial pressure value and a current pressure value, the minimum pressure threshold may be a negative number. Exceeding a threshold that is negative may refer to a negative value whose absolute value exceeds the absolute value of the threshold (i.e., the negative value exceeding the negative threshold has a greater negative numerical value).

The absolute value of the maximum and minimum pressure magnitude thresholds may be anywhere in the range of 10-250 Pa, more preferably 10-100 Pa, more preferably within the range 10-50 Pa, more preferably in the range 20-30 Pa, and more preferably 25 Pa.

The relative pressure may be referred to as the pressure delta.

The relative pressure may be a difference in pressure between two points in the pressure data. The two points in the pressure data may be a first pressure measurement made in the pressure data, and a last pressure measurement made in the pressure data. The two points in the pressure data may be first and last pressure measurements made in a defined period/range within the pressure data. Alternatively, the relative pressure may be a difference in pressure between a maximum pressure value in the pressure data and a minimum pressure value in the pressure data or a defined period/range in the pressure data.

An absolute value may be taken of the relative pressure value before comparing the relative pressure value to an absolute value of a relative pressure threshold value.

The rate of change may refer to the change of pressure in a unit of time, or between two consecutive magnitude pressure measurements made by the pressure sensor. Where multiple rate of change measurements are made, the rate of change of pressure used may be the most extreme rate of change value(s) of the rate of change of pressure measurements made, or across a subset of the rate of change of pressure measurements made in a region of interest. The region of interest may be determined by the controller. The most extreme value(s) of rate of change of pressure may be the biggest rate of change of pressure value measured, and/or the biggest negative rate of change of pressure measured.

The absolute value of the rate of change of pressure measurement(s) may be compared to a rate of change of pressure threshold. There may be separate rate of change of pressure thresholds for negative rate of change of pressure values and positive rates of change of pressure values. A negative value exceeding a negative threshold is taken to mean the absolute value of the negative value is greater than the absolute value of the threshold (i.e., the negative value exceeding the negative threshold has a greater negative numerical value). Alternatively, the same (absolute value for the) threshold may be used for both positive and negative rates of change of pressure values.

The absolute value of the maximum and minimum rate of change of pressure thresholds may be anywhere in the range of2-200Pa/s, more preferably within the range10-40 Pals, and more preferably 0.1 20 Pals.

The use of the standard deviation of the rate of change (slope) of pressure has been found to reliably determine a leakage event.

The value of standard deviation of the rate of change (slope) of pressure thresholds may be anywhere in the range of 1-100 Pals, more preferably within the range 5-75 Pals, and more preferably 50 Pals.

The controller may be configured, when a leakage event is recorded, to either: stop or pause a biological sample analysis process being performed by the automatic laboratory instrument; or put the automated laboratory instrument into an error state after the sample analysis process being performed is completed, such that no further sample analysis processes can be started.

Stopping a biological sample analysis may include preventing (e.g., via the pressure controller) the pipette head/pipette tip from aspirating or dispensing fluid.

Additionally, or alternatively, the controller may be configured to alert the user of a leakage when a leakage event is detected. The controller may issue a leakage notification alert to the user. The automatic laboratory instrument may include a user interface which notifies the user of a leakage when controlled to do so by the controller. The notification may be delivered via a visual, haptic or sound generating element. The controller may be configured to receive an indication from the user (e.g., via a GUI of the automatic laboratory instrument) that the leakage issue has been resolved, and may be configured to then continue with the paused biological sample analysis process.

The controller may be configured to record the number of leakage events. For example in short- or long-term memory (e.g., in RAM, on-board HDD, or networked storage). The number of recorded leakage events may be accessible to the user via the GUI of the automatic laboratory instrument.

In some examples, the controller is configured, when a predetermined number of leakage events, separated in time, have been recorded, to either: stop or pause a biological sample analysis process being performed by the automatic laboratory instrument; or put the automated laboratory instrument into an error state after the sample analysis process being performed is completed, such that no further sample analysis processes can be started. That is, in contrast to above where only a single leakage event need be detected, the controller may be configured to stop or pause the biological sample analysis process, or put the automated laboratory instrument into an error state after the sample analysis process being performed is completed to prevent further sample analysis processes being started, only when a predetermined number of leakage events, separated in time, have been recorded or detected.

By only stopping a biological sample analysis process when two separate leakage events have been recorded, the automatic laboratory instrument can be advantageously prevented from unnecessarily reacting to single false positive readings, in which a leakage event is recoded despite there being no leakage.

The predetermined number of leakage events may be two, three, four, five, six, seven, eight, nine, ten, or more than ten.

In some examples, the controller extracts the values of each of the properties using at least one algorithm. The controller may use a different algorithm for each of the extracted values.

In some examples, the controller extracts the values of each of the properties from the received pressure data using an algorithm that takes averages across multiple pressure measurements made by the pressure sensor.

More particularly, the algorithm used takes averages of the series of pressure measurements forming the set of received pressure data to obtain a series of averaged pressure measurements forming a new set of averaged pressure data. The number of averaged measurements in the averaged pressure data may be equal to the number of received pressure measurements in the received pressure data. The controller (e.g., via the algorithm) may then extract a value for each of two or more properties of the averaged pressure data.

By averaging across multiple pressure measurements, the controller advantageously filters out noise and one-off outlier measurements, thereby reducing the risk of false positive leakage events being recorded.

The algorithm may use sliding averaging (also known as a moving average).

The averaging may involve taking a (e.g., sliding) median result. For example, a median may be taken across 3, 4, 5, 6, 7, 8, 9, 10 or 10+ measurements of the pressure sensor. In this way, one-off outlier measurements can be filtered out or have their impact lessened.

The averaging may involve taking a (e.g., sliding) mean over a number of measurements. The mean may be taken over between 10-100 results, or over 100+ results. More specifically, the mean may be taken using between 20-90 results, 30-90 results, 40-90 results, 50-80 results, 60-70 results, or 64 results. In this way, the risk of inducing a false positive leakage event to be recorded is reduced.

In some examples, the pressure sensor is configured to continuously record the pressure within the channel of the pipette head.

Advantageously, this allows the pressure sensor to provide a broader range of pressure measurements to the controller, which the controller can then consider and use. As a result, leakage events can be detected more accurately.

Alternatively, the pressure sensor may be configured to only record the pressure within the channel of the pipette head for one or more predetermined pressure sensing periods. The one or more predetermined sensing periods may each last for at least 1, 1.5, 2, 2.5, 3, 3.5, or 4 seconds.

The pressure sensor may take readings every 1, 2, 3, 4, 5, 6, 7, 8, 9, or 10+ ms.

Alternatively, where the pressure sensor is configured to only record the pressure within the channel of the pipette head for one or more predetermined pressure sensing periods, the pressure sensor may be configured to take a certain number of pressure readings within the predetermined pressure sensing period.

In some examples, the controller is configured to define a data analysis period within the received pressure data from which the values for each of the two or more properties of the pressure data are extracted.

Advantageously, this allows the controller to identify the most useful data for determining leakage events. For example, the pressure data measured when the controller is aspirating fluid, which may show spikes in pressure readings that have nothing to do with leakage events, may be removed. As such, the detection of leakage events can be made more accurate.

The data analysis period may last for at least 1, 1.5, 2, 2.5, 3, 3.5, or 4 seconds.

The two or more properties may include a difference between a maximum pressure value measured in the data analysis period and minimum pressure value measured in the data analysis period, referred to herein as a delta pressure. The controller may compare the value extracted for the delta pressure value to one or more delta pressure thresholds. The controller may compare the value extracted for the delta pressure value to a maximum pressure delta pressure threshold, and/or a minimum pressure delta pressure threshold. The maximum and minimum pressure delta thresholds are respective property thresholds. The minimum pressure delta threshold may be a negative number.

The absolute value of the maximum and minimum delta pressure thresholds may be anywhere in the range of 10-100 Pa, more preferably within the range 10-50 Pa, more preferably in the range 20-30 Pa, and more preferably 25 Pa

In some examples, the data analysis period corresponds to a period in which an external surface of the pipette tip is not immersed in a liquid.

Advantageously, this prevents fluctuations in pressure caused by the pipette tip entering or leaving a liquid from causing a false positive result, improving leakage detection.

The controller may determine when the pipette tip has left, or entered, a liquid using characteristic features in the recorded pressure data that have been predetermined to be caused by these events. The controller may then be able to better select a data analysis period.

In some examples, the data analysis period corresponds to a period in which the pipette head is moving along a longitudinal axis along which the channel of the pipette head extends.

The movement of the pipette head along the longitudinal axis may increase the likelihood of leakage events occurring. Thus, detecting leakage events whilst the pipette head is moving in this way will allow leakage events that would otherwise be missed to be detected. In other words, the sensitivity of the instrument to leakage events may be increased.

The data analysis period may further include a period in which the pipette head is stationary, and/or when the pipette head is moving in a lateral plane perpendicular to the longitudinal axis.

Alternatively, the data analysis period may correspond to a period in which the pipette head is stationary in both the lateral plane and longitudinal plane.

The data analysis period may correspond to a period in which the pipette head and/or the pipette tip is holding an aspirated fluid. The data analysis period may correspond to a period in which the aspirated fluid is being held at the second end of the pipette tip. In other words, the data analysis period may correspond to a period in which no TAG has been aspirated into the pipette tip.

In some examples, the data analysis period corresponds to a period substantially immediately following the aspiration of fluid by the pipette head.

Advantageously, this allows leakage events to be detected and recorded before the pipette head has been moved away from the container from which the fluid has been aspirated. Therefore, if there is leakage (shown by the recording of one or more leakage events), and the biological sample analysis process is stopped, the pipette can be maintained in a position in which any leakage/dripping goes straight back into the container. In other words, the leakage can be contained so as to avoid soiling the automatic laboratory instrument.

The present disclosure is not limited in this way, however. For example, the data analysis period may correspond to a period substantially immediately preceding the dispensation of an aspirated fluid from the pipette tip (e.g., into a container). Once again, this allows dripping from the pipette head to be contained in a container, avoiding soiling of the automatic laboratory instrument. This data analysis period may occur after any TAGs have been dispensed.

In some examples, the automatic laboratory instrument is further configured to perform a plurality of runs of a biological sample analysis process, and wherein the pressure sensor is configured to record pressure data across the plurality of runs of the biological sample analysis process.

A 'run' may be defined as the automated laboratory instrument performing a series of steps through which a biological sample is analysed, which may include the pipette head being used to aspirate, hold, and dispense a fluid (possibly plural times).

The additional pressure data provided by measuring across multiple runs advantageously allows the controller to more accurately detect leakage events. Particularly for less leaky pipette heads, which may only leak once in every two or more runs.

The biological sample analysis process includes the steps of the pipette head/ pipette tip: aspirating a predetermined amount of aspirated fluid, holding the fluid for a predetermined holding time, and subsequently dispensing the predetermined amount of fluid

During the predetermined holding time, the pipette head may be moved in the longitudinal direction (e.g., out of and into a container to aspirate and dispense the fluid respectively). For example, the pipette head/ pipette tip may first aspirate a fluid from a first container, be moved longitudinally upward, remain stationary for a time, and then be moved longitudinally downward into a second container (which a user or other automated arm has replaced the first container with), and dispense the aspirated fluid therein.

Additionally, the pipette head may also be moved in a direction parallel to (i.e., within) the lateral plane that is perpendicular to the longitudinal axis (e.g., the pipette head may be moved laterally) during the predetermined holding time. For example, the pipette head/ pipette tip may first aspirate a fluid from a first container, be moved longitudinally upward, be moved in a lateral direction within the lateral plane over to a second container, then be moved longitudinally downward into said second container to dispense the aspirated fluid.

In some examples, the controller is configured to define a respective data analysis period corresponding to each run of the plurality of runs.

In some examples, the controller is configured, when leakage events are detected in at least two runs of the biological sample analysis process, to either: stop or pause the biological sample analysis process; or put the automated laboratory instrument into an error state after the sample analysis process being performed is completed, such that no further sample analysis processes can be started.

Advantageously, this prevents erroneous or outlier leakage event results from a single run, which may be caused by effects other than actual leakage from the pipette tip, from unnecessarily causing a cessation of the current biological sample analysis process or future biological sample analysis processes. In other words, the leakage detection accuracy is improved.

In some examples, the controller is configured to stop the biological sample analysis process when leakage events are detected in two adjacent runs of the biological sample analysis process.

The controller may be a processor (e.g., CPU) or other component suitably configured and located within the automatic laboratory instrument. The controller may be configured to control the flow controller, that is it may issue commands or instructions to the flow controller. The controller may also be configured to implement a requested biological analysis, and may be the main controller of the automatic laboratory instrument.

According to a second aspect of the present disclosure, there is provided a leakage detection method for an automatic laboratory instrument configured to analyse biological samples, the leakage detection method comprising the steps of: receiving pressure data from a pressure sensor configured to detect a pressure within a channel of a pipette head; extracting a value for each of two or more properties of the received pressure data; comparing the respective extracted values of the two or more properties to respective property thresholds; and recording a leakage event when each of the extracted values exceeds its respective property threshold.

The use of at least two properties of the pressure data to determine leakage events can increase the accuracy of the leakage detection. For example, false positive leakage events (e.g., events which may otherwise cause a leakage event to be recoded despite there being no leakage, such as an air bubble bursting in the pipette tip) are less likely to trigger multiple thresholds tailored to the detectable pressure characteristics of an actual leakage event. In this way, false positive leakage events can be filtered out, and the overall accuracy of the leakage detection may be increased.

The method may further comprise the step of using the pressure sensor to detect pressure within the channel of the pipette head.

The skilled person, equipped with the present disclosure, will appreciate that the second aspect of the disclosure may include, insofar as compatible and not explicitly ruled out, any of the features detailed in the first aspect of the present disclosure. The leakage detection method of the second aspect may be stored on a computer-readable storage medium, and may be implemented by a controller of an automated laboratory instrument.

In a further aspect, there is provided a leakage detection method as set out in the second aspect, where a value for at least one (or only one) property is extracted instead of two or more, and so a leakage event recorded when the value of the extracted valued is greater than a respective property threshold. In all other respects, the method of the further aspect is the same as the method of the second aspect.

According to a third aspect of the present disclosure, there is provided a second automatic laboratory instrument for analysing biological samples, the automatic laboratory instrument comprising: a pipette head having a channel, the channel being connectable to a pipette tip through which fluid is aspirated and dispensed; a flow controller, configured to control the flow of fluid through the channel of the pipette head; a pressure sensor configured to detect a pressure within the channel of the pipette head so as to collect pressure data for the channel; and a controller connected to the pressure sensor, wherein the controller is configured to record leakage events detected from pressure data received from the pressure sensor, wherein the automatic laboratory instrument is configured to determine the presence of a leak in the pipette head by detecting and recording leakage events for more than one run of the automatic laboratory instrument.

By detecting and using leakage events across multiple runs of the automated laboratory instrument, false positive leakage events can be minimised.

By requiring leakage events to be recorded across multiple runs of the automatic laboratory instrument, false positive leakage events (e.g., events which may otherwise cause a leakage event to be recoded despite there being no leakage, such as an air bubble bursting in the pipette tip) are prevented from leading to a positive leakage determination in isolation, improving the overall accuracy of leakage detection.

The skilled person, equipped with the present disclosure, will appreciate that the third aspect of the present disclosure may include, insofar as compatible and not explicitly excluded, any of the features detailed in the first and second aspects of the present disclosure. In particular, it is noted that the only difference in subject matter between the first and third aspects of the present disclosure is that the automated laboratory instrument of the first aspect increases leakage detection accuracy through the extraction of two or more properties of the pressure data, whilst the automated laboratory instrument of the third aspect increases leakage detection accuracy through the detection of leakage events across more than one run of the automatic laboratory instrument. It is further noted that the automated laboratory instrument of the first aspect of the present disclosure details examples in which leakage events are measured across two runs of that automated laboratory instrument. This explicitly shows that the features of the automated laboratory instrument of the third aspect of the present disclosure may be used in combination with the features detailed in relation to the automated laboratory instrument of the first aspect of the present disclosure. The following lays out an explicit example in which subject matter first detailed in relation to the automatic laboratory instrument of the first aspect of the present disclosure can be used in combination with the automatic laboratory instrument of the third aspect of the present disclosure.

In some examples, the controller of the automated laboratory instrument may be configured to: receive the pressure data from the pressure sensor, extract a value for each of one or more properties of the received pressure data, compare the extracted values of the one or more properties to respective property thresholds, and record a leakage event when each of the extracted values exceeds its respective property threshold.

In some examples, the automated laboratory instrument may be configured to stop or pause a biological sample analysis process (e.g., corresponding to a run of the automatic laboratory instrument) when leakage events are recorded in at least two separate runs.

According to a fourth aspect of the present disclosure , there is provided a leakage detection method for an automatic laboratory instrument configured to analyse biological samples, the leakage detection method comprising the steps of: receiving pressure data from a pressure sensor configured to detect a pressure within a channel of a pipette head; recording leakage events detected from the received pressure data; and determining the presence of a leak in the pipette head by detecting and recording leakage events for more than one run of the automatic laboratory instrument.

By requiring leakage events to be recorded across multiple runs of the automatic laboratory instrument, false positive leakage events (e.g., events which may otherwise cause a leakage event to be recoded despite there being no leakage, such as an air bubble bursting in the pipette tip) are prevented from leading to a positive leakage determination in isolation, improving the overall accuracy of leakage detection.

For the same reasons as described above in relation to the third aspect of the present disclosure, the skilled person, equipped with the present disclosure, would immediately recognise that features detailed in relation to the first, second and third aspects of the present disclosure would be combinable with the subject matter of the fourth aspect of the present disclosure.

Further aspects of the present invention provide: a computer program comprising code which, when run on a computer, causes the computer to perform the method of any preceding method aspect; a computer readable medium storing a computer program comprising code which, when run on a computer, causes the computer to perform the method of any preceding method aspect; and a computer system programmed to perform the method of any preceding method aspect.

The disclosure includes the combination of the aspects and preferred features described except where such a combination is clearly impermissible or expressly avoided.

### Summary of the Figures

Embodiments and experiments illustrating the principles of the disclosure will now be discussed with reference to the accompanying figures in which:
**Fig. 1** is a schematic of an automated laboratory instrument.
**Fig. 2** is a flowchart of a first method for leakage detection.
**Fig. 3** is a flowchart of a second method for leakage detection.
**Fig. 4** is a graphical plot of a pressure curve used to determine the optimal data analysis period for use in the leakage detection methods of Figs. 2 and 3
**Fig. 5** is a graphical plot of several additional pressure curves obtained in a similar manner to the pressure curve of Fig. 4.
**Figs. 6(a)****-(f)** are correlation histograms used to define the optimal property thresholds for use in the leakage detection methods 1000 2000 of Figs. 2 and 3.
**Fig. 7** is a graphical plot of twenty pressure representing a sample of the pressure curves used in the correlation histograms of Figs. 6(a)-(f).

### Detailed Description

Aspects and embodiments of the present disclosure will now be discussed with reference to the accompanying figures. Further aspects and embodiments will be apparent to those skilled in the art.

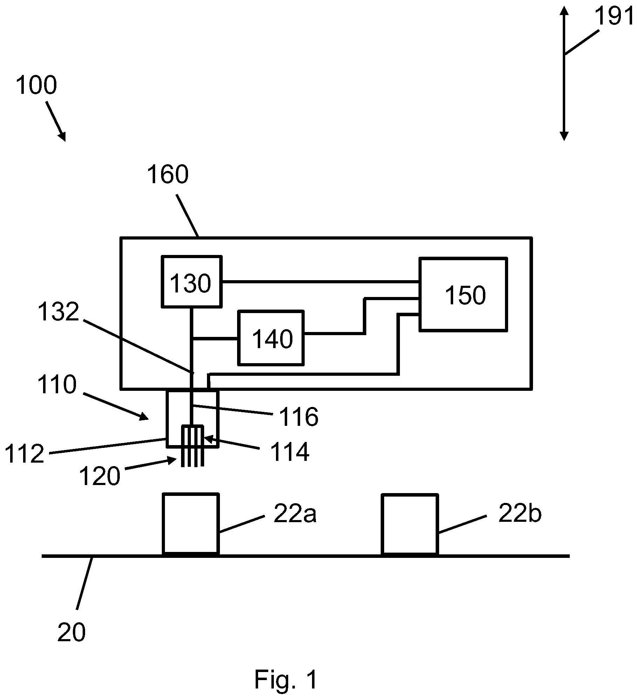

Fig. 1 is a schematic diagram of an automated laboratory instrument 100, including a workstation 20 having containers 22a 22b supported thereon, and an instrument housing 160 arranged above (in the frame of reference of the page) the workstation 20.

The instrument housing 160 includes a multi-channel pipette head 110 that is connectable to a plurality of pipette tips 120 for aspirating and dispensing fluids. More specifically, the multi-channel pipette head 110 is formed of a body 112 having a plurality of channels 114 extending therein, wherein a distal end of each respective channel of the plurality of channels 114 is located at a distal end surface of the body 112 and is fluidly connectable to a respective pipette tip of the plurality of pipette tips 120. The present disclosure is not limited to multi-channel pipette heads. The automated laboratory instrument may include a pipette head having one or more channels. Where the pipette head has more than one channel, as in the present example, the pipette head may be referred to as a multi-channel pipette head.

In the present example, the connection between the plurality of pipette tips 120 and the plurality of channels 114 is at the distal end surface of the body 112. However, the present disclosure is not limited in this way. For example, in some examples the multi-channel pipette head 110 may include a plurality of hollow tubular elements protruding from the body 112, wherein each respective hollow tubular element of the plurality of hollow tubular elements aligns with a distal end of a respective channel of the plurality of channels 114 so as to effectively extend each of the plurality of channels 114 beyond the body 112. In such examples, a distal end of each hollow tubular elements is connectable to a respective pipette tip of the plurality of pipette tips 120 so as to fluidly connect each respective pipette tip to a respective channel of the plurality of channels 114.

Each of the respective pipette tips of the plurality of pipette tips 120 includes a fluid contact end which represents the distalmost point of each respective pipette tip when connected to the multi-channel pipette head 110. Said fluid contact end of each respective pipette tip includes an opening through which fluid is aspirated into the respective pipette tip and dispensed from the respective pipette tip when the automated laboratory instrument 100 is in use, as is described below.

Returning to the multi-channel pipette head 110, this further includes a junction within the body 112 at which each of the plurality of channels 114 merges into a parent channel 116. The parent channel 116 extends to a proximal end surface of the body 112, opposite the distal end surface of the body 112, to form a fluid connection interface via which other components of the automated laboratory instrument 100 are fluidly connectable to the plurality of pipette tips 120 (e.g., the flow controller 130 and pressure sensor 140 discussed below). However, the present disclosure is not limited in this way, and instead each of the plurality of channels 114 may extend to a proximal end surface of the body 112 so as to each be individually fluidly connectable to other components of the automated laboratory instrument 100 (e.g., to a one or a plurality of flow controllers and one or a plurality of pressure sensors. Each of these components is described in more detail below). In such examples, the body 112 may serve merely to hold each of the plurality of pipette tips 120 at a uniform distance to each other.

The automatic laboratory instrument 100 further includes a flow controller 130, a pressure sensor 140, and a controller 150, each of which is fluidly or electrically connected to the multi-channel pipette head 110 as shown in Fig. 1.

Each of the flow controller 130, pressure sensor 140 and controller 150 are contained within a housing 160. Further, the multi-channel pipette head 110 is movably engaged to an external surface of the housing 160, such that the multi-channel pipette head 110 is movable relative to the housing 160 along both a longitudinal axis (indicated by double arrow 191) and a lateral plane perpendicular to the longitudinal axis 191. However, in other examples, the housing 160 may be omitted, and/or the multi-channel pipette head 110 may be attached to a separate actuation mechanism (not shown) configured to allow the multi-channel pipette head 110 to move along the longitudinal axis 191 and within the lateral axis.

The flow controller 130 is a pump/piston. The flow controller 130 is fluidly connected to the multi-channel pipette head 110 via the connection channel 132, which connects to the parent channel 116 via the fluid connection interface. As a result, the flow controller 130 is also fluidly connected to the plurality of pipette tips 120 via the multi-channel pipette head 110. In other examples, the flow controller 130 may be individually connected to each respective multi-channel pipette head channel 114/pipette tip, so as to be able to controller the pressure within each channel/pipette tip (as described below) individually.

The flow controller 130 is configured to control the flow of fluid, and thus the pressure, in the plurality of pipette tips 120 so as to cause aspiration or dispensation of fluid through the openings in the fluid contact ends of each of the plurality of pipette tips 120. For example, by pumping fluid (e.g., gas) out of the plurality of pipette tips 120 via the plurality of channels 114, the flow controller 130 will cause the pressure in the plurality of pipette tips 120 to be decreased, and thus fluid (e.g., air or liquid) will be aspirated through the openings in the fluid contact ends of the plurality of pipette tips 120. Conversely, the flow controller 130 can cause an increase in pressure in the plurality of pipette tips 120 by pumping fluid from the multi-channel pipette head 110 into the plurality of pipette tips 120, and thus cause dispensation of fluid through the openings in the fluid contact ends of the plurality of pipette tips 120.

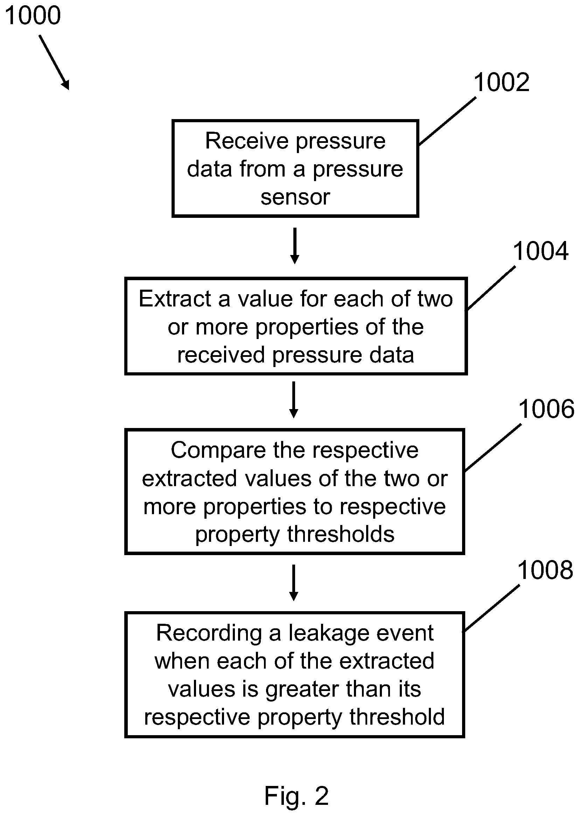

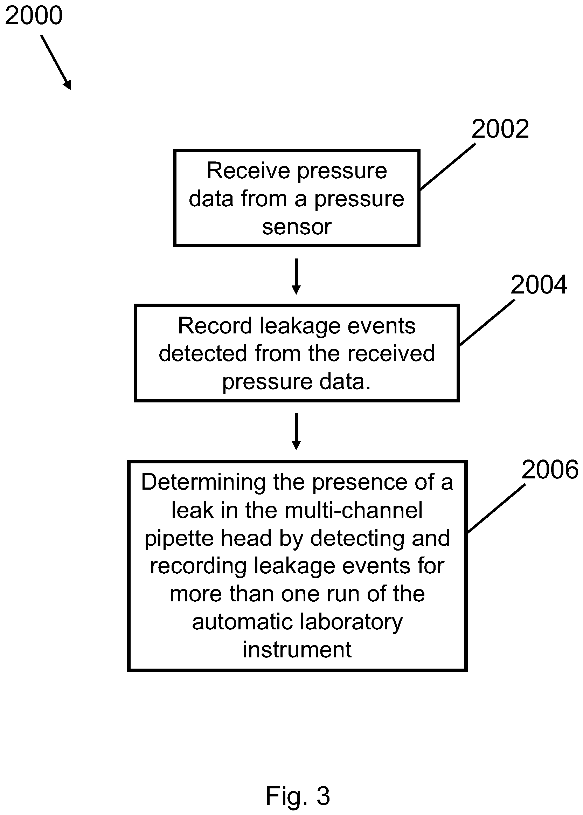

The pressure sensor 140 is also connected to the multi-channel pipette head 110, so as to measure the pressure in the channels of the plurality of channels 114. As each of the respective channels of the plurality of channels 114 is fluidly connected to a respective pipette tip of the plurality of pipette tips 120, this also means that the pressure sensor 140 is capable of measuring the pressure within the plurality of pipette tips 120. In this way, the pressure sensor 140 is able to collect pressure data relating to the pipette tips of the plurality of pipette tips 120, which is usable to determine the presence of a leakage from the multi-channel pipette head 110 as described in relation to Figs. 2 and 3 below. In other examples, the pressure sensor 140 may be individually connected to each respective multi-channel pipette head channel 114/pipette tip, so as to be able to measure the pressure within/collect pressure data on each individually.

Finally, the controller 150 is electrically connected to the multi-channel pipette head 110, and is further electrically connected to both the flow controller 130 and the pressure sensor 140.

The controller 150 is configured to control the automated laboratory instrument 100 throughout the performance of one or more runs of a biological sample analysis process, which can include the steps of:
- lowering (in the frame of reference of the page) the multi-channel pipette head 110 along the longitudinal axis 191 into the first container 22a until the fluid contact ends of the plurality of pipette tips 120 contact a fluid held in the first container 22a,
- aspirating a predetermined volume of liquid from the first container 22a into the plurality of pipette tips 120,
- raising (in the frame of reference of the page) the multi-channel pipette head 110 out of the first container 22a along the longitudinal axis 191,
- aspirating a predetermined volume of gas into the plurality of pipette tips 120 so as to provide a trailing air gap (TAG) buffer between the aspirated fluid and fluid contact end openings of the plurality of pipette tips 120,
- moving the multi-channel pipette head 110 in the lateral plane until the multichannel pipette head 110 is longitudinally aligned with the second container 22b,
- lowering the multi-channel pipette head 110 into the second container 22b along the longitudinal axis 191,
- dispensing the TAG held in the plurality of pipette tips 120, and
- dispensing the liquid held in the plurality of pipette tips 120 into the second container 22b.

The controller 150 is further configured to receive pressure data from the pressure sensor 140, and utilise said pressure data to detect and record leakage events in the multi-channel pipette head 110 as will be described in relation to Figs. 2 and 3 below. Said leakage event being, for example, a liquid droplet falling from one of the plurality of pipette tips 120.

In the event of a leakage in the multi-channel pipette head being detected, the controller 150 can control the automated laboratory instrument 100 to shut down/stop performing a biological sample analysis process.

Fig. 2 is a first leakage detection method 1000 that is usable by the controller 150 to determine whether the automatic laboratory instrument 100 of Fig. 1, and more particularly the multi-channel pipette head 110, is leaking.

In step 1002, the controller 150 receives pressure data from the pressure sensor 140. The pressure data includes multiple measurements taken by the pressure sensor 140 at discrete intervals (e.g., every 5 ms) continuously throughout the one or more biological sample analysis process runs performed by the automated laboratory instrument 100.

Between steps 1002 and 1004, the controller 110 may define a data analysis period for each run of the biological sample analysis process, wherein each data analysis period comprises a subset of the total set of pressure measurements obtained for the biological sample analysis process run to which the data analysis period relates. Said data analysis period may then be used as the received pressure data in steps 1004-1006. In other words, the value for each of two or more properties may be extracted from, and related to, the data analysis period.

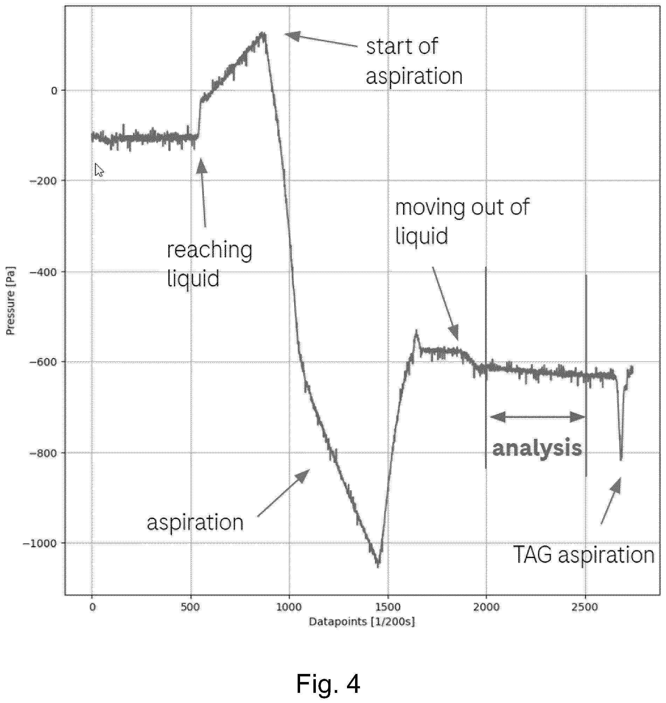

The determination of the optimal data analysis period is described below in relation to Fig. 4, but at this point it is noted that the data analysis period can correspond to period in which external surfaces of each of the plurality of pipette tips are not immersed in a liquid. For example, between the liquid aspirating and dispensing steps discussed in relation to the above given example of a biological sample analysis process.

More specifically, the data analysis period may correspond to a period in which aspirated liquid is held at the fluid contact end openings. In other words, before the step of aspirating the TAG defined in the above given example of a biological sample analysis process, or after the step of dispensing the TAG in the above given example of a biological sample analysis process.

More specifically still, the data analysis period may correspond to a period in which the multi-channel pipette head 110 is moving along the longitudinal axis 191. For example, during either the raising or lowering steps of the multi-channel pipette head 110 in the above given example of a biological sample analysis process.

More specifically still, the data analysis period may correspond to a period substantially immediately following the aspiration of fluid by the multi-channel pipette head 110. For example, during the raising step of the multi-channel pipette head 110 in the above given example of a biological sample analysis process.

In steps 1004-1006, the controller 150 (e.g., using a droplet detection algorithm, herein after `the algorithm') extracts a value for each of two or more properties of the received pressure data, and compares the extracted values of the two or more properties to respective property thresholds.

The algorithm may then proceed to compare the extracted values of the two or more properties to respective property thresholds.

The two or more properties can include one or more of a magnitude of the pressure, a rate of change (slope) of the pressure, and a standard deviation of the rate of change of the pressure.

Where one of the properties is a magnitude of the pressure, the corresponding property value is extractable by selecting a pressure measurement of the multiple pressure measurements making up the pressure data, or reduced data analysis period, that best fits a predetermined criteria or criterion. This predetermined criteria or criterion may be to select the largest pressure measurement made, in which case the extracted value will be the largest pressure measurement in the pressure data/data analysis period. Alternatively, the predetermined criteria or criterion may be to select the smallest pressure measurement made, in which case the extracted value will be the smallest pressure measurement in the pressure data/data analysis period. The pressure magnitude may be measured in Pascals.

Where one of the properties is a rate of change of the pressure, the corresponding property value is extractable by measuring a rate of change of pressure between each adjacent pair of the multiple pressure measurements in the pressure data, and selecting a resulting rate of change that best fits a predetermined criteria or criterion. The predetermined criteria or criterion may be to select the largest rate of change, or the smallest rate of change. The pressure rate of change may be measured as the derivative of Pascals in time, Pals.

Where one the properties is a standard deviation of the rate of change of the pressure, the corresponding property value is extractable by measuring a rate of change of pressure between each adjacent pair of the multiple pressure measurements in the pressure data, determining an average rate of change using the determined rate of change values, and then determining a standard deviation of the average rate of change. The standard deviation of rate of change of pressure may be measured as the derivative of Pascals in time, Pals.

In addition to the above, when a data analysis period is defined from the pressure data, the two or more properties can include a pressure delta representing a difference between a maximum pressure measured in the data analysis period and a minimum pressure measured in the data analysis period. The value extracted for the delta pressure property may be comparable to both a maximum delta pressure threshold and a minimum delta pressure threshold. Alternatively, the modulus may be taken of the value of the delta pressure threshold to obtain an absolute value of the delta pressure threshold, and this absolute value may be compared to a single absolute delta pressure threshold.

In some examples, multiple values for one or more of the properties of the two or more properties of the are extracted, and each of the multiple values compared to a separate respective property threshold. For example, where the property is the pressure magnitude or the rate of change of pressure, both a maximum value and a minimum value for each property may be extracted, and each value of each property may be compared to respective property thresholds.

In some examples, the controller 150 may extract the value of each of the properties from the received pressure data using an algorithm that takes averages across multiple pressure measurements made by the pressure sensor 150. For example, the algorithm may take a sliding median of multiple (e.g., 5, 10, 15 , 20 or 20+) adjacent pressure measurements in the pressure data, and/or the algorithm may also take a sliding mean of multiple (e.g., 8, 16, 24, 32, 40, 48, 56, 64, 72, 80, or 80+) pressure measurements in the pressure data, so as to produce a set of averaged pressure data made up of averaged pressure measurements. The algorithm may then extract values for each of the properties from the averaged pressure data. However, the present disclosure is not limited in this way.

In step 1008, the controller 150 records a leakage event when each of the extracted values exceeds its respective property threshold.

Following step 1008, the controller 150 may be configured to stop a biological sample analysis process being performed by the automatic laboratory instrument 100 when a set number of leakage events are detected. For example, when one, two, three, or three plus leakage events are detected. In some examples, the controller 150 can be configured to stop the biological sample analysis process when leakage events are detected in a defined number of consecutive runs. In some examples, the controller 150 can be configured to stop the biological sample analysis process when leakage events are detected in at least two runs of the biological sample analysis process.

Fig. 3 is a second leakage detection method 2000 that is performable by the controller 150 to determine whether the automatic laboratory instrument 100 of Fig. 1, and more particularly the multi-channel pipette head 110, is leaking.

In step 2002, as in step 1002, the controller 150 receives pressure data from the pressure sensor 130.

In step 2004, the controller 150 is configured to record leakage events detected from the received pressure data. For example, the controller 150 may extract one or more values for each of one or more properties of the received pressure data, compare the one or more extracted values of the one or more properties to one or more respective property thresholds, and record a leakage event when each of the one or more respective property threshold are exceeded. As in the first leakage detection method 1000, properties may include a magnitude of the pressure, a rate of change of the pressure, a standard deviation of a rate of change of the pressure, and/or a delta pressure threshold representing a difference between maximum/minimum pressure values measured in a data analysis period.

In step 2006, the controller determines the presence of a leak in the multi-channel pipette head 110 by detecting and recording leakage events for more than one run of the automatic laboratory instrument 100 (said 'run' being the performance of a biological sample analysis process). More specifically, the controller 150 is configured to keep a leakage event tally, and increment said tally by one whenever a leakage event is detected. In other examples, the controller is configured to keep different respective leakage event tallies for each respective channel, and increment a respective leakage event tally whenever a leakage event is detected in the channel to which said respective leakage event tally is related. In some examples, the controller 150 is configured to measure a maximum of one leakage event per run, but the present disclosure is not limited in this way, and instead the controller may be configured to measure any number of leakage events in each run.

Following step 2006, the controller 150 may be configured to stop a biological sample analysis process when leakage events are recorded in at least two separate runs of the automatic laboratory instrument 100.

In more specific examples, the controller 150 may only be configured to stop or pause a biological sample analysis process when leakage events are recorded in at least two adjacent runs of the automatic laboratory instrument 100. More specifically, the controller 150 may keep two separate leakage detection tallies, wherein the two tallies are used on alternate runs of the automatic laboratory instrument 100 (e.g., a first tally is used on a first run, a second tally is used on a second run, the first tally is used on the third run, the second tally is used on the fourth run, etc.), and each of the respective tallies may be reset to zero before a subsequent use. The controller may then be configured to stop the biological sample analysis process when both the first and second tallies are non-zero.

Fig. 4 is a graphical plot of a pressure curve used to determine the optimal data analysis period for use in the leakage detection methods 1000 2000 of Figs. 2 and 3. The pressure curve was obtained from an automated laboratory instrument such as shown in the automated laboratory instrument 100 of Fig. 1 whilst said automated laboratory instrument performed a biological sample analysis process. Said biological sample analysis process involving a multi-channel pipette head moving into a container containing liquid lysis waste, aspirating 700µL of said liquid lysis waste, moving out of the liquid lysis waste and the container, and aspirating a TAG. The time between moving out of the liquid lysis waste and aspirating the TAG being approximately 2.5 seconds, in which time 500 measurements (datapoints) were made by a pressure sensor fluidly connected to a single channel of a multi-channel pipette head at 5ms intervals.

Based on the following three criteria points, the inventors have identified the optimal period in this pressure curve for detecting leakage events (e.g., the optimal data analysis period that is usable by the controller 150 of Fig. 1 whilst performing the methods of Figs. 2 and 3) as being the time between the multi-channel pipette head moving out of the lysis waste liquid, and the aspiration of the TAG:
- The droplet formation is not instantaneous, and so the right step allows observing the potential droplet formation for multiple seconds.
- For a reliable droplet detection, no trailing air gap (TAG) should be aspirated during the observation period as this delays the droplet formation and distorts the pressure curve shape.
- No other anomalies from the automated laboratory instrument should significantly impact the data analysis period. An example being the pressure changes caused as the multi-channel pipette head is moved into or removed from a liquid to be aspirated, as seen in the pressure curve around datapoints 500 and 1800.

In other words, the inventors have identified the period between the 2000 and 2500 datapoint mark as the optimal data analysis period. A period lasting for multiple seconds (criteria 1), in which no TAG is aspirated (criteria 2), and in which no other anomalies from the automated laboratory instrument should are expected to significantly impact the pressure curve (criteria 3).

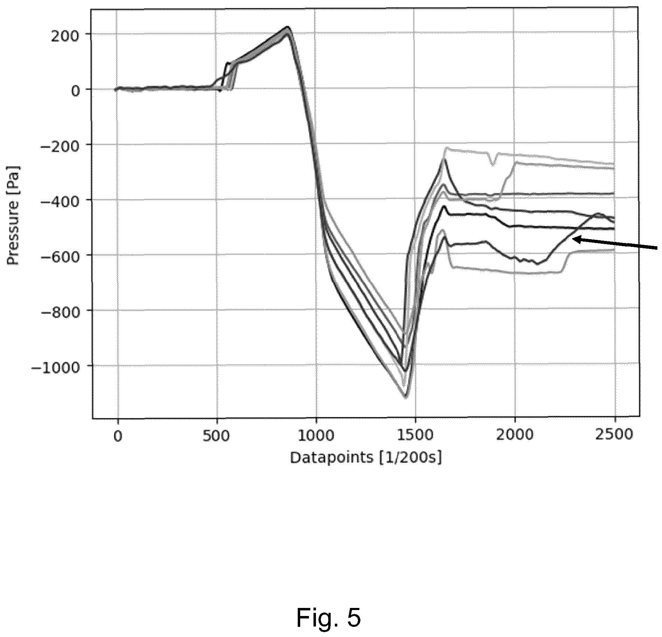

Fig. 5 is a graphical plot of several additional pressure curves obtained in a similar manner to the pressure curve of Fig. 4, using seven different multi-channel pipette heads. Upon visual inspection, it was found that only the multi-channel pipette head from which the pressure curve indicated by the arrow was obtained showed visible signs of leakage. In Fig. 5, said indicated pressure curve shows a far greater pressure magnitude variation across the 2000-2500 datapoint range, further supporting the inventor's identification of this period as an optimal period in which to detect leakage events.

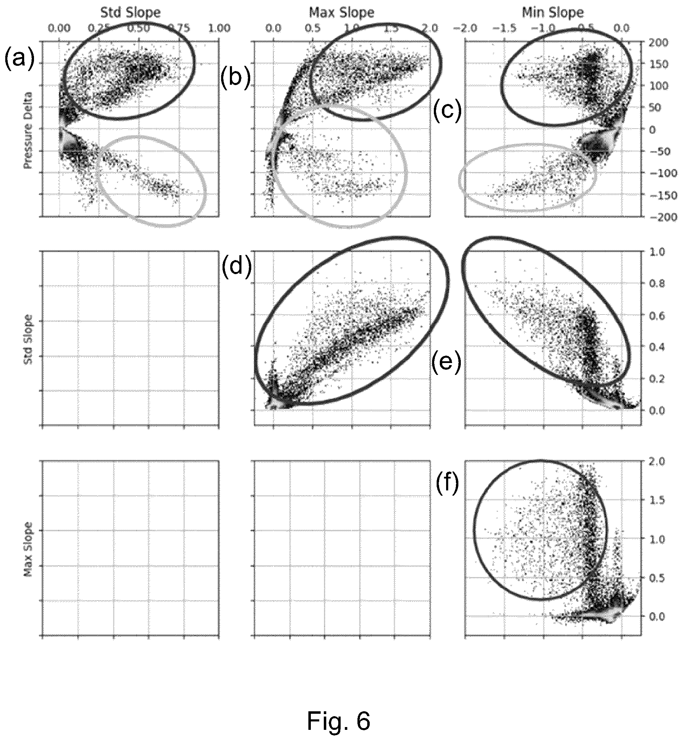

Figs. 6(a)-(f) are correlation histograms used to define the optimal property thresholds for use in the leakage detection methods 1000 2000 of Figs. 2 and 3.

The correlation histograms are plotted using data extracted from pressure curves obtained in a similar manner to the pressure curves of Figs. 4 and 5. More particularly, the present dataset includes 619,728 pressure curves measured using twelve automated laboratory instruments of a similar nature to the automated laboratory instrument 100, wherein each pressure curve was obtained whilst one of said 12 automated laboratory instruments performed a biological sample analysis process in which a liquid was aspirated into a multi-channel pipette head/a plurality of pipette tips.

The optimal data analysis period, as defined in Figs. 4 and 5, of each of said 619,728 pressure curves was analysed to extract the following features:
- Pressure delta: obtained by measuring a difference between the maximum pressure in the data analysis period, and the minimum pressure in the data analysis period;
- Std slope: obtained by measuring a standard deviation of the average rate of change of pressure within the data analysis period.
- Max slope: obtained by measuring a maximum rate of change of the pressure within the data analysis period.
- Min slope: obtained by measuring the minimum rate of change of the pressure (which may be a negative number) within the data analysis period.

This data was then used to obtain the correlation histograms of Figs. 6(a)-(f), in which Fig. 6(a) shows pressure delta plotted against std slope, Fig. 6(b) shows pressure delta plotted against max slope, Fig. 6(c) shows pressure delta against min slope, Fig. 6(d) shows std slope plotted against max slope, Fig. 6(e) shows std slope plotted against min slope, and Fig. 6(f) shows max slope plotted against min slope.

For each of the features, the detected values show locations with a high occurrence rate. The high occurrence rates are located at the points in the histograms with the highest datapoint densities. In each of the histograms, this is around the 0,0 coordinate mark. These are all from normal/ideal aspiration curves (e.g., the multi-channel pipette head is not leaking). From those main clusters, several clusters with less occurrences can be seen. These clusters are shown in the circled regions in the histograms, and form from three different error patterns. More particularly:
- Minimal amount of dripping: the formation of a droplet on the pipette tip with a rather gradual increase in pressure followed by a faster decrease when the drop becomes larger than the opening of the pipet tip is clearly visible in the pressure curve. Sometimes multiple times within the 2.5s optimal data analysis period described above.
- Heavy leakage: the pressure curve shows a rather random pattern as the liquid flows out of the tip and droplets form fast and randomly.
- Too little liquid in the container from which the multi-channel pipette head is aspirating: either the pressure curve remains completely flat or it shows a single jump or drop. This is probably due to air bubbles bursting inside the pipet tip.

The several clusters from the various error patterns shown in Figs. 6(a)-(f) do not show a clear separation from the main clusters at the 0,0 coordinates of the histograms. This is due to the gradual increase in leakage. A channel of the multi-channel pipette head can start to leak slightly. This results in a droplet formation, which shows as a gradual increase in the pressure. This is then followed by a single droplet, multiple droplets and finally in a heavy leakage. Thus, there is no clear separation between a pipetting channel, which is not yet showing droplets, and one that is already slightly leaking.

Of the 619,728 pressure curves, 3352 curves triggered the droplet/leakage detection algorithm. All those curves were visually checked and only a few of them could not be clearly identified as leaking curves. The pressure curves of the complete runs of the questionable curves have been further analysed but for some of the it still remained unclear if leakage occurred or not.

With this in mind, the inventors chose the thresholds of the algorithm so as to make minimal amounts of leakage with single droplets detectable, on the basis that otherwise significant leakage events might not be detected as a result of minimal leakage events, which total into a single significant leakage event, going undetected.

In particular, the following optimal property thresholds for use in the leakage detection methods of Figs. 2 and 3 to be:
- Max delta pressure threshold: 25 Pascals
- Min delta pressure threshold: -25 Pascals
- Standard deviation of the rate of change of pressure: 0.25 Pa/dt(50 Pals)
- Maximum rate of change of pressure: 0.1 Pa/dt(20Pa/s)
- Minimum rate of change of pressure: -0.1 Pa/dt (-20Pa/s)

In the above, dt refers to 'per datapoint'. Each of 619,728 pressure curves was obtained using a pressure sensor in which measurements were taken every 5 ms (e.g., dt=0.005s).

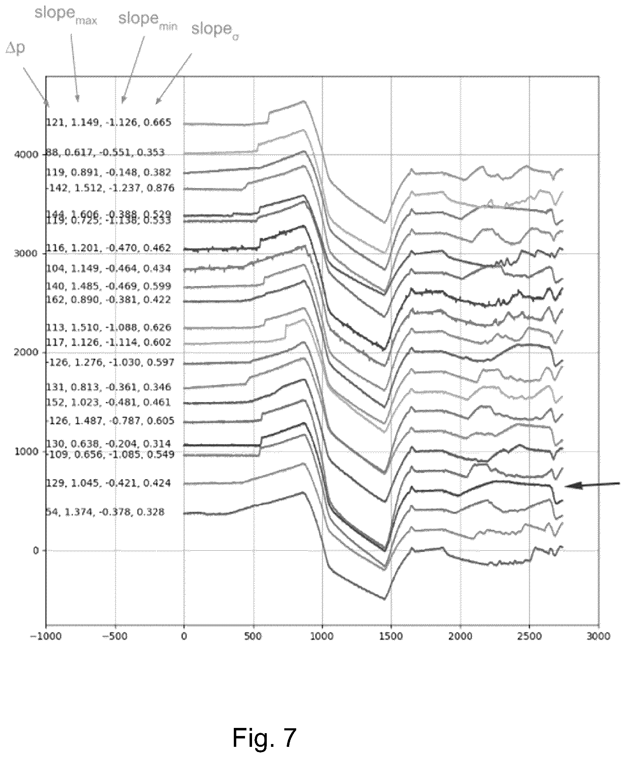

Fig. 7 shows a selection of 20 "error" pressure curves is shown in the graphical plot of Fig. 7, each of which forms part of the 619,728 pressure curves used to obtain the correlation histograms of Figs. 6(a)-(f). Each curve includes a value of the delta pressure (Δp), a maximum rate of change of pressure (slopeₘₐₓ), a minimum rate of change of pressure (slopeₘᵢₙ), and a standard deviation of the rate of change of pressure (slope_{σ}). From this selection, only the curve marked with an arrow at the bottom is questionable. All others show clear signs of leakage.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the disclosure in diverse forms thereof.

While the disclosure has been described in conjunction with the exemplary embodiments described above, many equivalent modifications and variations will be apparent to those skilled in the art when given this disclosure. Accordingly, the exemplary embodiments of the disclosure set forth above are considered to be illustrative and not limiting. Various changes to the described embodiments may be made without departing from the spirit and scope of the disclosure.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. An automatic laboratory instrument for analysing biological samples, the automatic laboratory instrument comprising:
a pipette head having a channel, the channel being connectable to a respective pipette tip through which fluid is aspirated and dispensed;
a flow controller, configured to control the flow of fluid through the channel of the pipette head;
a pressure sensor configured to detect a pressure within the channel of the pipette head so as to collect pressure data for the channel; and
a controller connected to the pressure sensor, wherein the controller is configured to:
receive the pressure data from the pressure sensor,
extract a value for each of two or more properties of the received pressure data,
compare the extracted values of the two or more properties to respective property thresholds, and
record a leakage event when each of the extracted values exceeds its respective property threshold.

2. The automatic laboratory instrument of claim 1, wherein the two or more properties include one or more of a magnitude of the pressure, a relative pressure, a rate of change of the pressure, and a standard deviation of the rate of change of the pressure.

3. The automatic laboratory instrument of claim 1 or claim 2, wherein, when a predetermined number of leakage events, separated in time, have been recorded, the controller is configured to either:
stop or pause a biological sample analysis process being performed by the automatic laboratory instrument; or
put the automated laboratory instrument into an error state after the sample analysis process being performed is completed, such that no further sample analysis processes can be started.

4. The automatic laboratory instrument of any previous claim, wherein the controller extracts the values of each of the properties from the received pressure data using an algorithm that takes averages across multiple pressure measurements made by the pressure sensor.

5. The automatic laboratory instrument of any previous claim, wherein the pressure sensor is configured to continuously record the pressure within the channel of the pipette head.

6. The automatic laboratory instrument of any previous claim, wherein the controller is configured to define a data analysis period within the received pressure data from which the values for each of the two or more properties of the pressure data are extracted.

7. The automatic laboratory instrument of claim 6, wherein the data analysis period corresponds to a period in which an external surface of the pipette tip is not immersed in a liquid.

8. The automatic laboratory instrument of claim 6 or claim 7, wherein the data analysis period corresponds to a period in which the pipette head is moving along a longitudinal axis along which the channel of the pipette head extend.

9. The automatic laboratory instrument of any one of claims 6-8, wherein the data analysis period corresponds to a period substantially immediately following the aspiration of fluid by the pipette head.

10. The automatic laboratory instrument of any previous claim, further configured to perform a plurality of runs of a biological sample analysis process, and wherein the pressure sensor is configured to record pressure data across the plurality of runs of the biological sample analysis process.

11. The automatic laboratory instrument of claim 10, wherein the controller is configured to define a respective data analysis period corresponding to each run of the multiple runs.

12. The automatic laboratory instrument of claim 11, wherein, when leakage events are detected in at least two runs of the biological sample analysis process, the controller is configured to either:
stop or pause the biological sample analysis process when leakage events are detected in at least two runs of the biological sample analysis process, or
put the automated laboratory instrument into an error state after the sample analysis process being performed is completed, such that no further sample analysis processes can be started.

13. A leakage detection method for an automatic laboratory instrument configured to analyse biological samples, the leakage detection method comprising the steps of:
receiving pressure data from a pressure sensor configured to detect a pressure within the channel of a pipette head;
extracting a value for each of two or more properties of the received pressure data;
comparing the respective extracted values of the two or more properties to respective property thresholds; and
recording a leakage event when each of the extracted values exceeds its respective property threshold.

14. An automatic laboratory instrument for analysing biological samples, the automatic laboratory instrument comprising:
a pipette head having a channel, the channel being connectable to a pipette tip through which fluid is aspirated and dispensed;
a means of controlling the flow of fluid through the channel of the pipette head;
a pressure sensor configured to detect a pressure within the channel of the pipette head so as to collect pressure data for the channel; and
a controller connected to the pressure sensor, wherein the controller is configured to record leakage events detected from pressure data received from the pressure sensor,
wherein the automatic laboratory instrument is configured to determine the presence of a leak in the pipette head by detecting and recording leakage events for more than one run of the automatic laboratory instrument.

15. A leakage detection method for an automatic laboratory instrument configured to analyse biological samples, the leakage detection method comprising the steps of:
receiving pressure data from a pressure sensor configured to detect a pressure within a channel of a pipette head;
recording leakage events detected from the received pressure data; and
determining the presence of a leak in the pipette head by detecting and recording leakage events for more than one run of the automatic laboratory instrument.
